# EUROPEAN PATENT APPLICATION

(11) **EP 4 579 121 A1**
(43) Date of publication of application: **02.07.2025**
(21) Application number: 23383380.5
(22) Date of filing: 26.12.2023
(51) Int. Cl.: F17C 5/06

(54) **CONTAINER FOR STORING A COMPRESSIBLE FLUID AND METHOD FOR PREPARING SUCH A CONTAINER**

(71) Applicant: Abi Pericial S.L.P., 43201 Reus (Tarragona) (ES)
(72) Inventor: GONZÁLEZ PASCUAL, Nerea, 43840 Salou (ES)
(74) Representative: TRBL Intellectual Property

(57) **Abstract**

The invention provides a container (1) for storing a fluid, the container comprising a main chamber (2) comprising a material with a Young's modulus higher than 50 GPa. It also contains a main divider element (4) arranged inside the main chamber (2), wherein the main divider (2) element divides the main chamber in a main space (3) and an auxiliary space (11). It also contains a pressure sensor (13) configured to measure the pressure in the main space (3). It also contains a first bi-directional valve (8) arranged in the main space (3) and configured to let a first fluid enter and exit the main space (3). It also contains a fluid source comprising a fluid vessel (10) and a fluid compressor (12). It also contains a second valve (9) arranged in the auxiliary space (11) and configured to let a second fluid enter and exit the auxiliary space (11) to and from the fluid vessel (10). It also contains a valve actuator arranged to control the second bi-directional valve (9) and the fluid compressor (12) as a function of the pressure measured by the pressure sensor (13).

## Description

### TECHNICAL FIELD

This invention belongs to the field of containers of pressurized compressible fluids.

### STATE OF THE ART

When storing compressible fluids, the aim is to increase their density in order to store the greatest amount in the smallest possible volume.

There are two known solutions for storing compressible fluids. One is based on changing it to a liquid state, either by increasing its pressure, by reducing its temperature or a combination of both. When this alternative is not viable, the second technical solution is based on storing them under pressure.

When the compressible fluid is stored under pressure, the only way to use the fluid is by partially emptying the container. In fact, it is also necessary to reduce the pressure of the extracted fraction to a pressure which is suitable for its use.

For example, when industrial gases are stored in cylinders, the standardised storage pressure of these gases is 200 bar, while the working pressure is about 10 bar.

A simplified way of estimating the usable content of such cylinders for gases that do not undergo a change to liquid phase in storage is to consider the density of the fluid as proportional to the pressure at which it is stored. In this way, the usable content can be estimated as the difference between the storage pressure and the service pressure, divided by the storage pressure.

For the values described in the example of industrial gases stored in cylinders, the estimate of useful storage content would be 95% of the total content of the cylinder.

There are known applications that present the inconvenient that the service pressure is closer to the storage pressure.

### DESCRIPTION OF THE INVENTION

The invention provides an alternative solution for high-pressure compressible fluid storage by means of a device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a container for storing a fluid, the container comprising
a main chamber comprising a material with a Young's modulus higher than 50 GPa
a main divider element arranged inside the main chamber, wherein the main divider element divides the main chamber in a main space and an auxiliary space; and
at least a pressure sensor configured to measure the pressure in the main space;
a first bi-directional valve arranged in the main space and configured to let a first fluid enter and exit the main space;
a fluid source comprising a fluid vessel or a distribution grid and a fluid compressor;
a second valve arranged in the auxiliary space and configured to let a second fluid exit the auxiliary space to the fluid source;
a valve actuator arranged to control the second valve as a function of the pressure measured by the pressure sensor.

In the applications the invention is projected for, a strong container is needed, comprising a material with a Young's modulus higher than 50 GPa. In fact, in most cases, the material has a Young's modulus higher than 150 GPa. This type of materials (usually stainless steel) are suitable for keeping a constant volume at high pressures.

The exchange of fluid between the fluid source and the auxiliary space is governed by the fluid compressor and the second valve: the compressor forces the flow to be introduced in the auxiliary space while the second valve allows the second fluid to exit from the auxiliary space to the fluid source.

This container is used to store a working fluid in the main chamber. The storage of the working fluid is done at a nominal pressure. However, when the working fluid is being served (i.e., discharged) from the main chamber, the pressure would decrease, and the serving pressure would not be constant. The second sub-chamber has a fluid compressor which is used to introduce a second fluid in the auxiliary chamber to compensate the exit of the working fluid and keep the pressure inside the container within an acceptable range (which is almost constant).

Since the pressure is kept under minimal variations, the walls of the main chamber do not suffer from structural fatigue, since the pressure do not follow cycles of severe pressure variation. Therefore, the lifespan of the container is extended, and the need of periodic maintenance is avoided.

In some particular embodiments, the container further comprises at least one secondary divider element arranged inside the auxiliary space, wherein
the secondary divider element divides the auxiliary space in a first sub-space and a second sub-space;
the first sub-space contains a protection fluid; and
the second valve is arranged in the second sub-space and configured to let a second fluid exit the second sub-space to the fluid source.

The protection fluid acts as a barrier between the fluid which is intended to be stored in the main chamber and the fluid which is used to keep the pressure within an almost constant range in the interior of the container.

However, if there is an error in the divider elements, the working fluid and the second fluid may enter into contact, and this can be dangerous. To avoid that, a first sub-chamber is defined between the main chamber and the second sub-chamber. This first sub-chamber contains a fluid which acts as a barrier between both fluids to avoid this danger.

In some particular embodiments, the protection fluid comprises a liquid.

A liquid is not compressible, and transmit the pressure variations in a direct way.

In some particular embodiments, the protection fluid comprises an inert fluid, such as a noble gas.

An inert fluid in the event of a leakage between the first sub-chamber and any of the neighbouring chambers.

In some particular embodiments, the container further comprises a detector configured to measure the presence of at least one of the components contained in the container. In some particular embodiments, the container further comprises a safety device configured to close the first bi-directional valve as a function of the information provided by the detector.

The detector is configured to detect the unwanted presence of any of the components within the container. For example, it can be configured to detect the presence of the main fluid (which is only intended to be located in the main space) in the auxiliary space. In other embodiments, it can be configured to detect the presence of the second fluid (which is only intended to be located in the auxiliary space) in the main space. In the embodiment containing the secondary divider element, it can be configured to detect the presence of the protection fluid in any of the second sub-space or in the main space.

If any of these undesired situations take place, the detector is able to acknowledge it and, if the device contains a safety device, the charge or discharge operation may be stopped to avoid an accident.

In some particular embodiments, the main divider element and/or the secondary divider element comprises an elastomeric element, wherein the elastomeric element is configured to admit a strain greater than 100% without permanent deformation, so that the elastomeric element is configured to exert an elastic recovery force when undergoing a pressure.

An elastic element can help for a quick compensation of small pressure variations, without the need of acting on the second valve.

In some particular embodiments, the main divider element and/or the secondary divider element comprises a wall and a spring element, wherein the spring element is configured to exert an elastic recovery force when undergoing a pressure.

A spring element acting on a more rigid divider may act in a similar way than the elastic element.

In some particular embodiments, the main divider element and/or the secondary divider element contains a bellows element configured to fold and unfold, so that the extension of the bellows element is adapted to the difference of volume between the main space and the auxiliary space.

A bellows element, which may be a bellows or any other element that can deploy from a first folded position to a second unfolded position without being strained, is useful because it does not need any specific mechanical features.

In some particular embodiments, the container further comprises a flow meter arranged between the output of the auxiliary space and the second valve, configured to measure the flow that entries and exits the auxiliary space.

In a second inventive aspect, the invention provides a method for preparing a container according to the first inventive aspect, wherein the method comprises the steps of:
providing a container according to the first inventive aspect;
providing a preliminary fluid;
using the preliminary fluid to fill the auxiliary spaces of the containers;
operating on the preliminary fluid to obtain at least a main fluid; and
filling the main spaces of the containers with the main fluid by the first bi-directional valve.

This method allows the use of the invention in an overall approach, using the synergies with the operation on a preliminary fluid, which can take place in an energy plant, to create the main fluid.

In some particular embodiments, the preliminary fluid is water, and the main fluid is hydrogen.

A hydrogen plant with an electrolyser used to transform water in hydrogen can be used to obtain the hydrogen as the main fluid to fill the main space and also to use the preliminary fluid to fill the auxiliary space.

In a third inventive aspect, the invention provides a method for preparing a container according to the first inventive aspect, wherein the method comprises the steps of:
providing a container according to the first inventive aspect;
providing a close loop of a preliminary fluid;
using the preliminary fluid to obtain a heat exchange on a thermodynamic process and to fill the auxiliary space; and
providing a main fluid to fill the main space and to be operated in the thermodynamic process.

This method allows the use of the invention in an overall approach, using the synergies with the operation on a fluid, which can take place in an energy storage plant.

In some particular embodiments, the preliminary fluid is water, and the main fluid is air.

A compressed air energy storage battery used to transform electrical power to mechanical energy can be used to store air as a main fluid at an almost constant pressure. Water can be chosen as the auxiliary fluid, to provide thermal energy exchange, both to improve the efficiency of the energy storage battery plant.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a particular embodiment of a container according to the invention.
Figure 2 shows a different embodiment of a container according to the invention.
Figures 3, 4 and 5 show different embodiments of a method for preparing the container according to the invention.

In these figures, the following reference numbers have been used:
- 1: Container
- 2: Main chamber
- 3: Main space
- 4: Main divider element
- 5: First sub-space
- 6: Secondary divider element
- 7: Second sub-space
- 8: First bi-directional valve
- 9: Second valve
- 10: Fluid source
- 11: Auxiliary space
- 12: Compressor
- 13: Pressure sensor
- 14: Flow meter
- 15: Contaminant detector
- 21: Water supply
- 22: Electrolyser
- 23: Hydrogen line
- 24: Hydrogen supply
- 25: Air supply
- 26: Closed loop of water

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

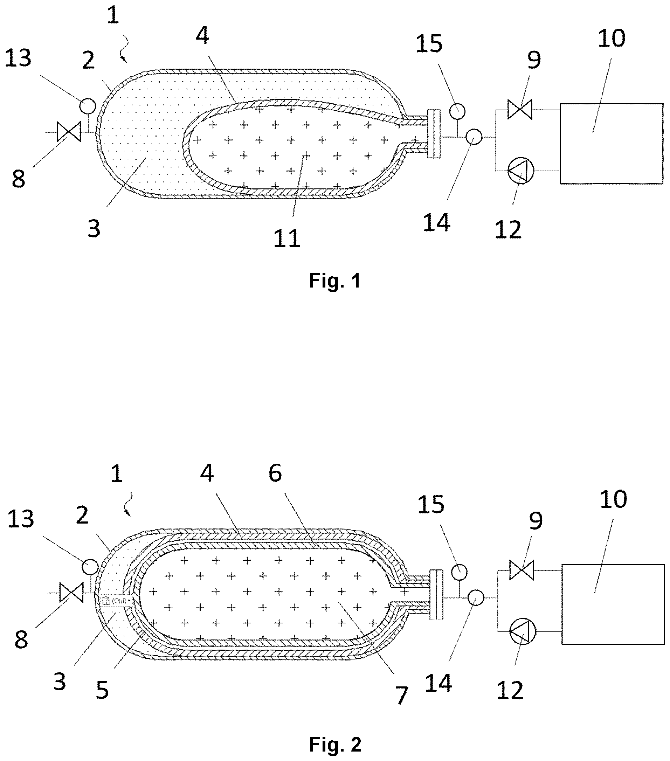

Figure 1 shows a particular embodiment of a container 1 according to the invention. This container 1 is configured to store hydrogen for its servicing at a hydrogen service station.

The container 1 comprises a main chamber 2 made of stainless steel. This main chamber contains a main divider element 4 inside. This main divider element 4 divides the main chamber 2 in a main space 3 and an auxiliary space 11.

In this case, the main divider element 4 is an elastic bag which provides a separation between the content of the main space 3 and the content of the auxiliary space 11. In other embodiments, this main divider element 4 may contain an elastic portion of a membrane or a diaphragm. In other embodiments, the main divider element main contain a rigid portion, such as a piston or a wall, which provides a gastight separation between the main space 3 and the auxiliary space 11. The piston is driven by the force exerted by the fluid inside the auxiliary space 11. This can be helped by a spring element or not. In other embodiments, the main divider element may have the shape of a bellows, which folds and unfolds depending on the volume difference between the main space 3 and the auxiliary space 11.

The system comprises a first bi-directional valve 8 which controls the charge and discharge of the main space 3. This line controlled by the first bi-directional valve 8 has a pressure sensor 13, which senses the pressure at the inlet of the main space 3.

The auxiliary space 11, defined by the main divider 4, is aimed to receive a variable volume of a second fluid from a fluid source 10, by the interposition of a control arrangement. This arrangement comprises a flow meter 14, a second valve 9 and a fluid compressor 12. These elements control the charge and discharge of the secondary fluid in the auxiliary space 11. The operation of these elements is governed by the information received from the pressure sensor 13 of the main space: when the pressure in the main space 3 varies (due to the charging or discharging of hydrogen inside the main space 3 by the first bi-directional valve 8), an actuator will control the second valve 9 and the compressor 12 to introduce or discharge the second fluid inside the auxiliary space 11, so that the charge and discharge of the secondary fluid is intended to keep the pressure as constant as possible in the main chamber 2.

As the pressure is kept almost constant regardless the content of hydrogen inside the main space 3, the servicing pressure is also kept constant, and almost the entire storage volume of the main chamber may be used. Further, there are not appreciable variations in the internal pressure of the main chamber, thus increasing the lifespan of the same and avoiding costly periodic maintenance actuations.

A contaminant detector 15 is also arranged to detect the undesired mixture between the fluid of the main space 3 and the fluid of the auxiliary space 11. This contaminant detection may be located in the main space or in the auxiliary space 11.

Figure 2 shows a different embodiment of a container 1 according to the invention. This container 1 is configured to store hydrogen for its servicing at a hydrogen service station.

In this case, the container 1 also comprises a main chamber 2 made of stainless steel with a main divider element 4 inside, which divides the main chamber 2 in a main space 3 and an auxiliary space.

In this case, the main divider element 4 is a membrane which provides a separation between the content of the main space 3 and the content of the auxiliary space. The auxiliary space contains a secondary divider element 6, which divides the auxiliary space in a first sub-space 5 and a second sub-space 7.

The first sub-space 5 contains a protection fluid and the second sub-space 7 is aimed to receive a variable volume of a second fluid from a fluid source 10, by the interposition of an arrangement similar to the one shown in Figure 1.

This arrangement comprises a flow meter 14, a second valve 9 and a fluid compressor 12. These elements control the charge and discharge of the secondary fluid in the second sub-space 7. The operation of these elements is governed by the information received from the pressure sensor 13 of the main space: when the pressure in the main space 3 varies (due to the charging or discharging of hydrogen inside the main space 3 by the first bi-directional valve 8), an actuator will control the second valve 9 and the compressor 12 to introduce or discharge the second fluid inside the second sub-space 7, so that the charge and discharge of the secondary fluid is intended to keep the pressure as constant as possible in the main chamber 2.

In this case, the protection fluid comprises a noble gas, although in other cases, another inert fluid or even a liquid, such as water, may be used for this purpose.

A contamination detector 15 is arranged in the main chamber to sense the presence of this protection fluid inside the main space 3. Thus, if the main divider element 4 suffers a crack and some of the protection fluid escapes to the main space 3, the detector may sense this presence.

A safety device may receive this warning from the detector 15 and may close the first bi-directional valve 8 to avoid an accident.

Any of the previous containers may be charged in an energy plant which produces the gas required to fill the main space (e.g., hydrogen).

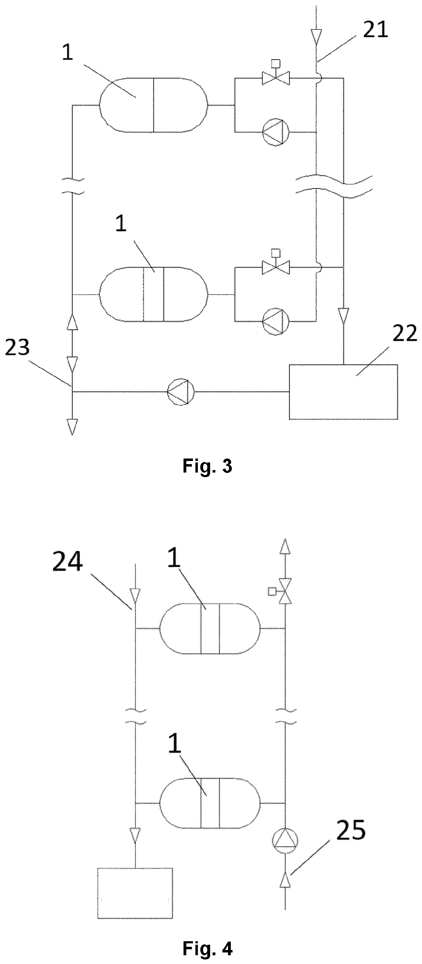

Figure 3, for example, shows in a plant for generating hydrogen, the following steps may be followed to charge the container:
providing a plurality of containers 1 according to any of the previous embodiments;
providing a water supply 21;
using the water supply 21 to fill the auxiliary spaces of the containers 1 with water;
feeding an electrolyser 22 with the water excess from the water supply 21, thus obtaining a first output of hydrogen to be transported in a hydrogen line 23 and a second output of oxygen; and
filling the main space of the containers 1 with the hydrogen from the hydrogen line 23.

A system of pumps and valves is used to make the fluids circulate in the appropriate direction and with an appropriate pressure.

With this method, the hydrogen for the main space and the water for the auxiliary space are produced in the same operation, so there is a synergy that give rise to the production of the complete arrangement of the container. The containers are filled trying to keep the inner pressure as constant as possible. Further, there are no toxic products in this process, so this can be performed without any limitation.

Figure 4 shows a particular embodiment for hydrogen storages in a vehicle. In the embodiment illustrated by this figure, the containers are filled in a plant which generates energy by means of fuel cells.

In this case, the method contains the following steps:
providing a plurality of containers 1 according to any of the previous embodiments;
providing a hydrogen supply 24;
connecting the input of the main space of each container 1 to the hydrogen supply 24, so that the main spaces of each container 1 may be filled with hydrogen;
connecting the input of the auxiliary space of each container 1 with an air supply 25 from the atmosphere, so that the auxiliary space may be filled at the same time, trying to keep a constant pressure during the process.

The stored hydrogen is used to feed a fuel cell, so that energy is obtained during the process. A system of pumps and valves is used to make the fluids circulate in the appropriate direction and with an appropriate pressure.

With this method, the hydrogen for the main space and the air for the auxiliary space are managed in the container simultaneously, so the pressure inside the container is kept as constant as possible. Further, there are no toxic products in this process, so this can be performed without any limitation.

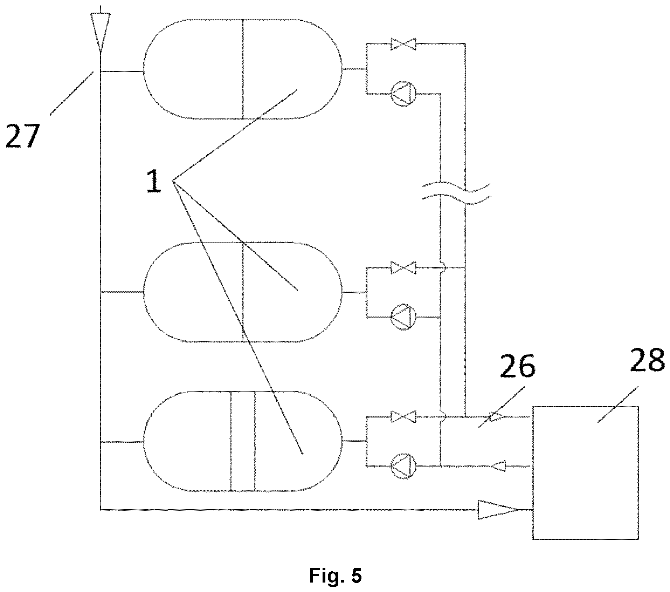

Figure 5 shows a further particular embodiment for a method for preparing such containers. The embodiment illustrated by this figure is based on a closed loop of water. In this case, the method contains the following steps:
providing a plurality of containers 1, wherein any of them can be according to any of the previous embodiments according to the present invention; and
providing a closed loop of water 26.

The closed loop of water 26 is used to feed a thermodynamic cycle 28, so that heat is obtained. Further, this closed loop of water 26 is used to fill the auxiliary spaces of the containers 1.

An air supply is used to feed the main spaces of the container, and this air also takes part of the aforementioned thermodynamic cycle 28.

With this method, the air for the main space and the water for the auxiliary space are managed in the container simultaneously, so the pressure inside the container is kept as constant as possible. Further, there are no toxic products in this process, so this can be performed without any limitation. Further, a thermodynamic cycle can be operated to obtain energy while the containers are filled.

## Claims

1. A container (1) for storing a fluid, the container comprising
a main chamber (2) comprising a material with a Young's modulus higher than 50 GPa;
a main divider element (4) arranged inside the main chamber (2), wherein the main divider (2) element divides the main chamber in a main space (3) and an auxiliary space (11);
at least a pressure sensor (13) configured to measure the pressure in the main space (3);
a first bi-directional valve (8) arranged in the main space (3) and configured to let a first fluid enter and exit the main space (3);
a fluid source comprising a fluid vessel (10) or a distribution grid and a fluid compressor (12);
a second valve (9) arranged in the auxiliary space (11) and configured to let a second fluid enter and exit the auxiliary space (11) to and from the fluid vessel (10);
a valve actuator arranged to control the second valve (9) and the fluid compressor (12) as a function of the pressure measured by the pressure sensor (13).

2. Container according to claim 1, further comprising at least one secondary divider element (6) arranged inside the auxiliary space, wherein
the secondary divider element (6) divides the auxiliary space (11) in a first sub-space (5) and a second sub-space (7);
the first sub-space (5) contains a protection fluid; and
the second valve (9) is arranged in the second sub-space (7) and configured to let a second fluid exit the second sub-space (7) to the fluid source.

3. Container according to claim 2, wherein the protection fluid comprises a liquid.

4. Container according to any of claims 2 or 3, wherein the protection fluid comprises an inert fluid, such as a noble gas.

5. Container according to any of claims 2 to 4, further comprising a detector (15) configured to measure the presence of at least one of the components contained in the container.

6. Container according to claim 5, further comprising a safety device configured to close the first bi-directional valve (8) as a function of the information provided by the detector (15).

7. Container according to any of the preceding claims, wherein the main divider element (4) and/or the secondary divider element (6) comprises an elastomeric element, wherein the elastomeric element is configured to admit a strain greater than 100% without permanent deformation, so that the elastomeric element is configured to exert an elastic recovery force when undergoing a pressure.

8. Container according to any of the preceding claims, wherein the main divider element (4) and/or the secondary divider element (6) comprises a wall and a spring element, wherein the spring element is configured to exert an elastic recovery force when undergoing a pressure.

9. Container according to any of the preceding claims, wherein the main divider element (4) and/or the secondary divider element (6) contains a bellows element configured to fold and unfold, so that the extension of the bellows element is adapted to the difference of volume between the main space and the auxiliary space.

10. Container according to any of the preceding claims, further comprising a flow meter (14) arranged between the output of the auxiliary space (11) and the second valve (9), configured to measure the flow that entries and exits the auxiliary space (11).

11. Method for preparing a container according to any of the preceding claims, wherein the method comprises the steps of:
providing a container (1) according to any of the preceding claims;
providing a preliminary fluid (21);
using the preliminary fluid (21) to fill the auxiliary spaces of the containers;
operating on the preliminary fluid to obtain at least a main fluid; and
filling the main spaces of the container with the main fluid by the first bi-directional valve (8).

12. Method according to claim 11, wherein the preliminary fluid is water, and the main fluid is hydrogen.

13. Method for preparing a container according to any of claims 1 to 10, wherein the method comprises the steps of:
providing a container according to any of claims 1 to 10;
providing a close loop of a preliminary fluid (26);
using the preliminary fluid to obtain a heat exchange on a thermodynamic process (28) and to fill the auxiliary space; and
providing a main fluid (27) to fill the main space and to be operated in the thermodynamic process (28).

14. Method according to claim 13, wherein the preliminary fluid is water, and the main fluid is hydrogen.
